# EUROPÄISCHE PATENTSCHRIFT

(11) **EP 1 194 319 B1**
(45) Veröffentlichungstag und Bekanntmachung des Hinweises auf die Patenterteilung: **12.11.2003**
(21) Anmeldenummer: 00943912.6
(22) Anmeldetag: 27.06.2000
(51) Int. Cl.: B60R 22/46, F16H 49/00

(54) **ROTATIONSSTRAFFER MIT MASSEKÖRPERANTRIEB**
ROTATION TENSIONER WITH AN INERTIA ELEMENT
PRETENSIONNEUR TOURNANT ENTRAINE PAR DES CORPS D'INERTIE

(30) Priorität: 28.06.1999 DE 19929387
(43) Veröffentlichungstag der Anmeldung: 10.04.2002
(73) Patentinhaber: AUTOLIV DEVELOPMENT AB, 447 83 Vargarda (SE)
(72) Erfinder: SCHMIDT, Martin, D-25337 Elmshorn (DE)
(74) Vertreter: Müller, Karl-Ernst, Dr., Dipl.-Ing.
(86) Internationale Anmeldenummer: EP0005978
(87) Internationale Veröffentlichungsnummer: WO01000460

(56) Entgegenhaltungen:
- WO-A-97/13660
- WO-A-97/13661
- WO-A-97/43149
- DE-A- 19 512 660
- DE-A- 19 602 549
- DE-U- 9 405 834

## Beschreibung

Die Erfindung betrifft einen Rotationsstraffer für einen Sicherheitsgurt, insbesondere in Kraftfahrzeugen, mit einem Gurtaufroller, dessen Gurtaufwickelwelle bei Auslösung des daran gekuppelten Rotationsstraffers durch einen zugeordneten Antrieb in Aufwickelrichtung des Sicherheitsgurtes gedreht wird, wobei der Antrieb aus einem eine Außenverzahnung aufweisenden Antriebsrad für die Gurtaufwickelwelle und aus einem das Antriebsrad über mindestens einen Teilumfang umgreifenden Kanal zur Durchleitung von bei Auslösung in dem Kanal beschleunigten und in Eingriff mit der Außenverzahnung des Antriebsrades gelangenden, in dem Kanal lose angeordneten Massekörpern besteht.

Soweit ein Rotationsstraffer mit den vorgenannten Merkmalen in der DE 195 12 660 A1 beschrieben ist, ist in dieser Schrift auch schon das Problem angesprochen, daß es bei dem Auftreffen des ersten Massekörpers auf die Außenverzahnung des Antriebsrades zu einer Blockade des Durchlaufens der nachfolgenden Massekörper durch das Antriebsrad, zumindest aber zu einer Störung des ordnungsgemäßen Ablaufes dieses Antriebsvorganges kommen kann. Die in der gattungsbildenden Druckschrift dafür vorgesehene Lösung, nämlich im Bereich des Aufeinandertreffens von Massekörpern und Antriebsrad eine Nachgiebigkeit bzw. Elastizität der betroffenen Bauteile einzustellen, um eine gegenseitige Blockierung von Massekörpern und Antriebsrad durch ein mögliches Ausweichen der derart ausgebildeten Bauteile zu verhindern, ist nicht ausreichend.

Der Erfindung liegt daher die Aufgabe zugrunde, bei einem gattungsgemäßen Rotationsstraffer einen ungestörten Lauf der Massekörper über das Antriebsrad mit formschlüssigem Eingriff der Massekörper in dessen Außenverzahnung sicherzustellen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in einer ersten Ausführungsform vor, daß zur synchronen, formkongruenten Einsteuerung der Massekörper in die Außenverzahnung des Antriebsrades ein aus einem nur eine der Außenverzahnung des Antriebsrades angepaßte Teilkontur eines formvollständigen Massekörpers aufweisenden ersten Massenkörper als Sucher und aus einem über eine Verbindungsrippe damit einstückig verbundenen formvollständigen zweiten Massekörper bestehendes Formelement vorgesehen ist.

Diese Lösung beruht auf dem Prinzip, daß aufgrund der nur teilweise ausgebildeten Kontur des ersten Massekörpers im Rahmen des Formelements der erste Massekörper als Sucher unabhängig von der Stellung der zugeordneten Ausnehmung der Außenverzahnung des Antriebsrades in diese Ausnehmung eintreten kann bis zur Anlage an der von der Teilkontur in Antriebsrichtung beaufschlagten Fläche der Ausnehmung und so gegebenenfalls eine Lagekorrektur des Antriebsrades bewirkt, so daß der mit dem ersten Massekörper als Bestandteil des Formelementes einstückig verbundene und daher in seiner Zuordnung zum ersten Massekörper festgelegte zweite Massekörper synchronisiert in die ihm zugeordnete Ausnehmung eintritt. Damit ist dann auch der Durchlauf der auf den zweiten Massekörper folgenden weiteren Massekörper gewährleistet.

Soweit die Ausbildung einer aus zwei miteinander verbundenen Massekörpern bestehenden Zwillingskugel aus der DE 196 02 549 A1 bekannt ist, befindet sich diese zur Erzielung eines Abdichtungseffektes mit einer Dichtung versehene Anordnung an dem dem pyrotechnischen Antrieb zugeordneten Ende, wahlweise auch an dem anderen Ende, der Abfolge von Massekörpern, ist jedoch ohne Einfluß auf den zu verbessernden Durchlauf der Massekörper durch die Außenverzahnung des Antriebsrades.

In den WO-Schriften WO 97/13661 wie auch WO 97/43149 ist jeweils ein Antrieb für einen Rotationsstraffer beschrieben, bei welchem eine aus mehreren miteinander verbundenen Kettengliedern bestehende Kette als Antriebselement über das mit der Gurtaufwickelwelle verbundene Zahnrad geführt wird. Zum Zwecke der Synchronisation ist bei der in der WO 97/13661 beschriebenen Kette der erste von dem Zahnrad erfaßte Kettenbolzen nur mit einem Teilquerschnitt ausgebildet, während bei der in der WO 97/43149 beschriebenen, aus in die Außenverzahnung des Zahnrades nach Art einer Zahnstange eingreifenden Zahngliedern bestehenden Kette der Zahn des ersten Zahngliedes abgeflacht ist.

Nach einem Ausführungsbeispiel der Erfindung wird die Teilkontur des ersten Massekörpers im Rahmen des Formelementes dadurch gebildet, daß die Teilkontur des ersten Massekörpers aus einer in Antriebsrichtung ausgerichteten Halbkugel besteht, deren dem zweiten Massekörper zugewandte Begrenzungsebene winklig zum Radiusstrahl des Antriebsrades angeordnet ist. Hierdurch wird für den ersten Massekörper die Möglichkeit eröffnet, den kritischen Zahn der Außenverzahnung des Antriebsrades zu passieren. Beim Auftreffen auf den folgenden Zahn, der sich theoretisch auch in einer kritischen Position befindet, tritt keine Blockade ein, da der Zusammenprall in diesem Fall aufgrund der um eine Zahnteilung veränderten Orientierung des Zahnes zu dem auftreffenden Massekörper in jedem Fall zu einem beginnenden Drehen des Antriebsrades führt.

Nach einem Ausführungsbeispiel der Erfindung ist vorgesehen, daß die Verbindungsrippe die fehlende Kontur des ersten Massekörpers zum zweiten Massekörper hin wenigstens teilweise fortsetzt; auf diese Weise wird die Ausrichtung des Formelementes bzw. des ersten Massekörpers zur Verzahnung verbessert.

Soweit es im Stand der Technik bereits bekannt ist, das Antriebsrad geteilt mit zwei symmetrischen Hälften auszubilden, ist nach einem Ausführungsbeispiel der Erfindung vorgesehen, daß die Verbindungsrippe zwischen die Hälften des Antriebsrades greift und das Formelement dadurch geführt ist.

In einer zweiten Ausführungsform der Erfindung ist vorgesehen, daß zur synchronen, formkongruenten Einsteuerung der Massekörper in die Außenverzahnung des Antriebsrades ein aus einem Massekörper und einem voreilenden Sucher bestehendes Formelement vorgesehen ist, wobei der Sucher des Formelementes als flaches, zwischen dem äußeren Rand des Antriebsrades und der Innenwandung des Kanals durchführbares Bauteil ausgebildet ist und das Antriebsrad eine an seinem äußeren Rand ausgebildete zweite Verzahnung als Steuerverzahnung aufweist, und wobei die Außenverzahnung der Aufnahme der Massekörper und die Steuerverzahnung zum Zusammenwirken mit dem Sucherbauteil des Formelementes derart zueinander angeordnet sind, daß das Sucherbauteil bei einer passenden Zuordnung des an ihn angeschlossenen ersten Massekörpers zu einer Ausnehmung der Außenverzahnung auf die Außenkontur eines zwischen den Zahnlücken der Steuerverzahnung liegenden Zahnsteges trifft und bei einer kritischen Zuordnung von Massekörper zur Außenverzahnung in eine Zahnlücke der Steuerverzahnung greift und durch Schub gegen die Zahnflanke das Antriebsrad in die passende Stellung verdreht.

Diese Ausführung beruht auf dem Prinzip, daß der Sucher als ein mit einer zweiten am Antriebsrad ausgebildeten Steuerverzahnung zusammenwirkendes Sucherbauteil ausgebildet ist, welches gegebenenfalls ebenfalls eine Lagekorrektur des Antriebsrades herbeiführt. Soweit das Sucherbauteil auf einen Zahnsteg der Steuerverzahnung des Antriebsrades trifft, ist die Steuerverzahnung zur die Massekörper aufnehmenden Außenverzahnung des Antriebsrades so angeordnet, daß der an das Sucherbauteil angeschlossene Massekörper synchron in die zugeordnete Ausnehmung des Antriebsrades einläuft; wenn das Sucherbauteil eine Zahnlücke der Steuerverzahnung trifft, so ist die Stellung des Antriebsrades nicht synchron zu dem einlaufenden Massekörper, und in diesem Fall hat das Sucherbauteil in der Zahnlücke einen gewissen Bewegungsspielraum und führt durch Anschlag an dem Ende der Zahnlücke in Antriebsrichtung des Antriebsrades eine Lagekorrektur derart herbei, daß die Außenverzahnung des Antriebsrades synchron zu den einlaufenden Massekörpern steht.

Hierzu ist nach einem Ausführungsbeispiel der Erfindung vorgesehen, daß das Sucherbauteil als T-förmiges Bauteil mit einem mit der Steuerverzahnung zusammenwirkenden T-Balken ausgebildet und mit dem als Kugel ausgebildeten ersten Massekörper verbunden ist. Nach Ausführungsbeispielen der Erfindung kann dabei vorgesehen sein, daß das Sucherbauteil und der erste Massekörper einstückig miteinander ausgebildet sind, oder daß das Sucherbauteil an seinem dem T-Balken gegenüberliegenden freien Ende gespreizt ist und damit die Kugel in einer zugeordneten Nut formschlüssig umgreift. Vorzugsweise kann das T-förmige Sucherbauteil als massives Metallteil ausgebildet sein.

Für beide Ausführungsformen der Erfindung kann zusätzlich vorgesehen sein, daß das Formelement in seiner Ausgangsstellung von einem in der Wandung des den Kanal ausbildenden Rohrgehäuses festgelegten Clip fixiert ist; hiermit ist der Vorteil verbunden, daß eine Sicherung der Massekörper im Ruhezustand über das mit dem Clip verbundene Formelement erfolgt; gleichzeitig ermöglicht der Clip eine Ausrichtung des Formelements hinsichtlich der Richtung seiner Längsachse sowie eine rotatorische Ausrichtung im Kanal des Rohrgehäuses. Soweit der Clip aufgrund seiner Ausgestaltung eine Federvorspannung aufweist bzw. plastisch verformbar ist, stellt der Clip zusätzlich eine Bewegung des Formelementes über das Antriebsrad sicher insoweit, als das Formelement um einen gewissen Betrag zwischen dem Kanal und dem Antriebsrad ausweichen kann, wie es insbesondere für die Ausführungsform der Erfindung mit dem T-förmigen Sucherbauteil erforderlich ist.

Vorteilhafterweise ist nach einem Ausführungsbeispiel der Erfindung der Clip in der Wandung des Rohrgehäuses mittels eines Scherstiftes fixiert.

Nach einem Ausführungsbeispiel der Erfindung kann vorgesehen sein, daß der Clip einen zwischen zwei Massekörper eingreifenden und die Reihe von aufeinanderfolgenden Massekörpern aneinanderdrückenden Federarm aufweist, womit die Kette der Massekörper spielfrei gegen den festklemmenden Kolben am anderen Ende der Kette der Massekörper gedrückt und das System dadurch entklappert ist.

In der Zeichnung sind Ausführungsbeispiele der Erfindung wiedergegeben, welche nachstehend beschrieben sind. Es zeigen:
- Fig. 1: eine erste Ausführungsform des Antriebes eines Rotationsstraffers in einer ausschnittsweisen Darstellung im Schnitt,
- Fig. 2: das Formelement einschließlich seiner Clip-Halterung in einer schaubildlichen Ansicht,
- Fig. 3: den Gegenstand der Figur 2 in einer auseinandergezogenen Einzeldarstellung von Formteil und Clip,
- Fig. 4: eine zweite Ausführungsform des Antriebes eines Rotationsstraffers in einer der Figur 1 entsprechenden Darstellung,
- Fig. 5: das für den Gegenstand der Figur 4 bestimmte Formelement einschließlich seiner Clip-Halterung in einer schaubildlichen Ansicht,
- Fig. 6: den Gegenstand der Figur 5 in einer auseinandergezogenen Einzeldarstellung von Formteil und Clip.

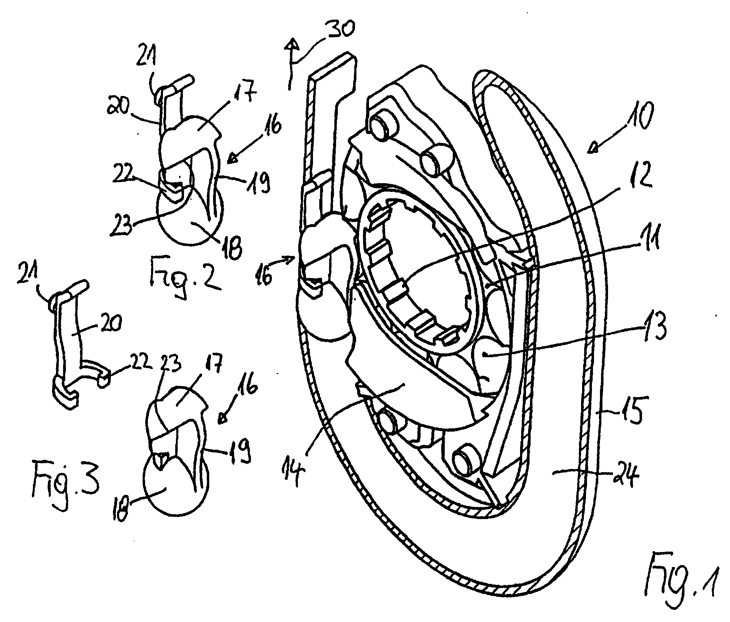

Der Antrieb für einen Rotationsstraffer ist in seinem grundsätzlichen Aufbau in der schon genannten DE 195 12 660 A 1 im einzelnen beschrieben, so daß insoweit darauf Bezug genommen wird. Vorliegend umfaßt die Zeichnung lediglich die Darstellung der von der Erfindung weitergebildeten Merkmale des Antriebes 10 eines Rotationsstraffers, wie er in Figur 1 dargestellt ist.

Dabei ist eine Hälfte des aus zwei symmetrisch aufgebauten Hälften zusammengesetzten bzw. zusammensetzbaren Antriebsrades 11 erkennbar, das mit einer Innenverzahnung 12 formschlüssig an eine nicht dargestellte Gurtaufwickelwelle eines Gurtaufrollers anschließbar ist. Das Antriebsrad 11 hat auf seinem äußeren Umfang eine Außenverzahnung 13, wobei die Form der einzelnen Ausnehmungen dieser Außenverzahnung als Kugelkalotte ausgebildet ist, weil bei dem dargestellten Ausführungsbeispiel wie auch im angezogenen Stand der Technik die Massekörper jeweils als Kugeln ausgebildet sind. Die dargestellte Hälfte des Antriebsrades 11 ist durch ein Schwert 14 geführt, so daß gegen dieses Schwert die nicht dargestellte Hälfte zur Komplettierung des Antriebsrades 11 gegensetzbar ist.

In der Ebene des Antriebsrades 11 ist ein gekrümmtes Rohrgehäuse 15 angeordnet, in dessen inneren Kanal 24 die der Beschleunigung des Antriebsrades 11 dienenden, im einzelnen nicht dargestellten kugelartigen Massekörper bevorratet sind. An dem in Antriebsrichtung (Pfeil 30) vorderen Ende der im einzelnen nicht dargestellten Kette von Massekugeln ist ein Formelement 16 angeordnet, welches durch die einstückige Verbindung einer ersten Massekugel 17 mit einer zweiten Massekugel 18 gebildet ist, wobei die erste Massekugel 17 als Sucher ausgebildet ist und hierzu nur eine Teilkontur einer formvollständigen Massekugel ausbildet. Diese Teilkontur besteht aus einer Halbkugel, wobei deren dem zweiten Massekörper 18 zugewandte Begrenzungsebene 23 winklig zum Radiusstrahl des Antriebsrades 11 angeordnet ist. Die erste Massekugel 17 ist mit der formvollständigen zweiten Massekugel 18 über eine schmale Verbindungsrippe 19 einstückig verbunden, wobei die Verbindungsrippe 19 in ihrem dem Antriebsrad 11 zugewandten Bereich die fehlende Kontur der ersten Massekugel 17 wenigstens teilweise fortsetzt, bevor sie in die insoweit formvollständig ausgebildete zweite Massekugel 18 einläuft.

Das von der ersten Massekugel 17 und der zweiten Massekugel 18 gemeinsam gebildete Formelement 16 ist von einem Clip 20 gehalten, der seinerseits über einen Scherstift 21 in der Wandung des gekrümmten Rohrgehäuses 15 in der Ausgangsstellung festlegbar ist, wobei die Verbindung des Clips 20 mit dem Formelement 16 durch seitlich das Formelement 16 in einer zugeordneten Nut umfassende Arme 22 erfolgt.

Während des Betriebes des Gurtaufrollers durch Abwickeln und Aufwickeln des Gurtbandes bei normalen Anschnallvorgängen ändert sich jeweils die Stellung der Ausnehmungen der Außenverzahnung 13 des Antriebsrades 11 zu dem Formelement 16 bzw. dessen erster Massekugel 17, so daß es bei Auslösung der pyrotechnischen Antriebsvorrichtung für die Massekugeln geschehen kann, daß die Außenverzahnung 13 des Antriebsrades 11 sich nicht in einer synchronisierten Stellung zu dem Formelement 16 befindet. Kommt es aufgrund einer Auslösung des Straffers zur Abtrennung des Scherstiftes 21, so bewegt sich der Clip 20 gemeinsam mit dem Formelement 16 in dem Kanal 24 des gekrümmten Rohrgehäuses 15 in Richtung des Pfeils 30, wobei nun zunächst die erste Massekugel 17 des Formelementes 16 in eine zugeordnete Ausnehmung der Außenverzahnung 13 des Antriebsrades 11 eintritt. Da diese erste Massekugel 17 nur eine Teilkontur in Form einer in Antriebsrichtung schräg gestellten Halbkugel aufweist, besteht ausreichend Spielraum, daß in jeder Stellung des Antriebsrades 11 die Halbkugel in eine der Ausnehmungen der Außenverzahnung 13 eintreten kann; über die Ausrichtung der Umfangsfläche der Halbkugel mit der Begrenzungsfläche der Ausnehmung der Außenverzahnung 13 erfolgt gegebenenfalls eine Lagekorrektur des Antriebsrades 11, so daß die nachfolgende zweite Massekugel 18 als Bestandteil des Formelementes 16 synchron in die Verzahnung 13 einläuft, womit auch die Synchronisation der Außenverzahnung 13 für die nachfolgenden Massekugeln sichergestellt ist.

Einzelheiten der Ausbildung von Formelement 16 und Clip 20 sind den Figuren 2 bzw. 3 zusätzlich zu entnehmen. Wie nicht weiter dargestellt, kann der Clip 20 zusätzlich mit einem Federelement ausgeführt werden, durch das die Kette von aufeinanderfolgenden Massekugeln spielfrei gegen den an dem entgegengesetzten Ende der Kette von Massekugeln festklemmenden Kolben entklappert wird.

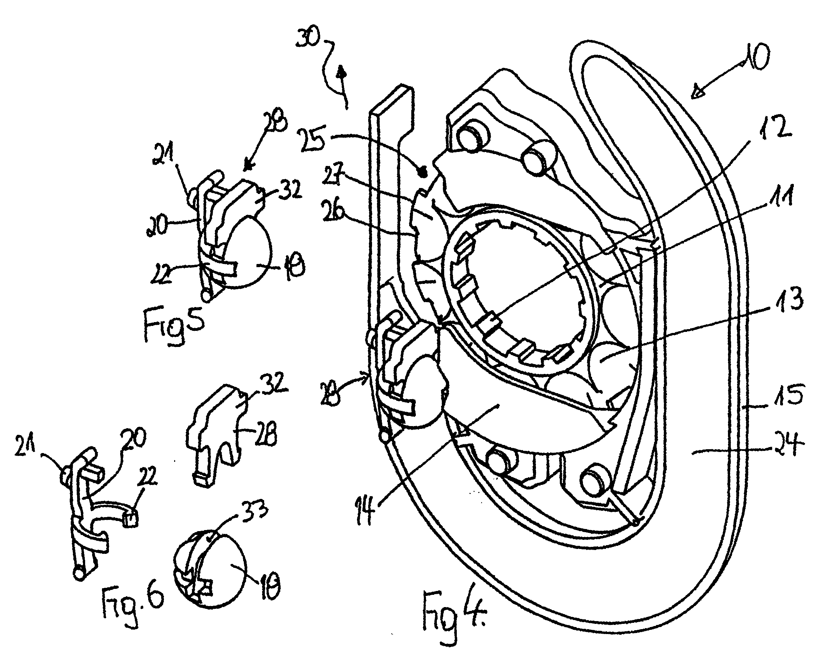

In den Figuren 4 bis 6 ist eine alternative Ausführungsform der Erfindung dargestellt, bei welcher das Antriebsrad auf seinem äußeren Umfang zusätzlich mit einer zweiten Steuerverzahnung 25 versehen ist, die aus einer Abfolge von im wesentlichen rechteckig ausgestalteten Zahnstegen 27 und Zahnlücken 26 besteht. Das zugehörige Formelement 16 ist bei diesem Ausführungsbeispiel durch eine erste Massekugel 18 gebildet, die mit einem T-förmigen flachen Bauteil 28 als Sucher zusammengeschlossen ist, wobei der T-Balken 32 des Sucherbauteils 28 den mit der Steuerverzahnung 25 zusammenwirkenden Sucherzahn ausbildet; das freie Ende des T-förmigen Bauteils 28 ist gespreizt und umgreift damit die daran angeschlossene erste Massekugel 18 in einer zugeordneten Nut 33. Alternativ können Sucherbauteil 28 und erste Massekugel 18 auch einteilig ausgeführt sein. Das so gebildete Formelement 16 ist seinerseits wiederum entsprechend der zu dem Ausführungsbeispiel gemäß Figuren 1 bis 3 getroffenen Beschreibung über einen Clip 20 in dem gekrümmten Rohrgehäuse 15 festgelegt.

Trifft bei Auslösung des Antriebes der T-Balken 32 des Sucherbauteils 28 als Sucherzahn auf einen Zahnsteg 27, so ist aufgrund der Zuordnung der Steuerverzahnung 25 zu der die Massekugeln aufnehmenden Außenverzahnung 13 sichergestellt, daß ein synchroner Einlauf der ersten Massekugel 18 wie auch der darauf folgenden Massekugeln gewährleistet ist. Trifft der T-Balken 32 des Sucherbauteils 28 als Sucherzahn auf eine Zahnlücke 26 der Steuerverzahnung 25, so geht damit eine ungünstige Ausrichtung der zugehörigen Ausnehmung der Außenverzahnung 13 zu der ersten Massekugel 18 einher, die jedoch dadurch korrigiert wird, daß das Sucherbauteil 28 in der Zahnlücke 26 in Antriebsrichtung (Pfeil 30) vorschiebt, bis es auf die Begrenzungswandung der Zahnlücke 26 trifft und hier eine Korrektur der Lage des Antriebsrades 11 derart vornimmt, daß die Synchronisation der Lage der Außenverzahnung 13 zu den Massekugeln gewährleistet ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Rotationsstraffer für einen Sicherheitsgurt, insbesondere in Kraftfahrzeugen, mit einem Gurtaufroller, dessen Gurtaufwickelwelle bei Auslösung des daran gekuppelten Rotationsstraffers durch einen zugeordneten Antrieb (10) in Aufwickelrichtung des Sicherheitsgurtes gedreht wird, wobei der Antrieb (10) aus einem eine Außenverzahnung (13) aufweisenden Antriebsrad (11) für die Gurtaufwickelwelle und aus einem das Antriebsrad (11) über mindestens einen Teilumfang umgreifenden Kanal (15, 24) zur Durchleitung von bei Auslösung in dem Kanal (15, 24) beschleunigten und in Eingriff mit der Außenverzahnung (13) des Antriebsrades (11) gelangenden, in den Kanal (15, 24) lose angeordneten Massekörpern (18) besteht, **dadurch gekennzeichnet, daß** zur synchronen, formkongruenten Einsteuerung der Massekörper (18) in die Außenverzahnung (13) des Antriebsrades (11) ein aus einem nur eine der Außenverzahnung (13) des Antriebsrades (11) angepaßte Teilkontur eines formvollständigen Massekörpers aufweisenden ersten Massenkörper (13) als Sucher und aus einem über eine Verbindungsrippe (19) damit einstückig verbundenen formvollständigen zweiten Massekörper (18) bestehendes Formelement (16) vorgesehen ist.

2. Rotationsstraffer nach Anspruch 1, wobei die Massekörper als Kugeln ausgebildet sind, **dadurch gekennzeichnet, daß** die Teilkontur des ersten Massekörpers (17) aus einer in Antriebsrichtung ausgerichteten Halbkugel besteht, deren dem zweiten Massekörper (18) zugewandte Begrenzungsebene (23) winklig zum Radiusstrahl des Antriebsrades (11) angeordnet ist.

3. Rotationsstraffer nach Anspruch 1 oder 2, **dadurch gekennzeichnet, daß** die Verbindungsrippe (19) die fehlende Kontur des ersten Massekörpers (17) zum zweiten Massekörper (18) hin wenigstens teilweise fortsetzt.

4. Rotationsstraffer nach einem der Ansprüche 1 bis 3, wobei das Antriebsrad geteilt mit zwei symmetrischen Hälften ausgebildet ist, **dadurch gekennzeichnet, daß** die Verbindungsrippe (19) zwischen die Hälften des Antriebsrades (11) greift und das Formelement (16) dadurch geführt ist.

5. Rotationsstraffer für einen Sicherheitsgurt, insbesondere in Kraftfahrzeugen, mit einem Gurtaufroller, dessen Gurtaufwickelwelle bei Auslösung des daran gekuppelten Rotationsstraffers durch einen zugeordneten Antrieb (10) in Aufwickelrichtung des Sicherheitsgurtes gedreht wird, wobei der Antrieb (10) aus einem eine Außenverzahnung (13) aufweisenden Antriebsrad (11) für die Gurtaufwickelwelle und aus einem das Antriebsrad (11) über mindestens einen Teilumfang umgreifenden Kanal (15, 24) zur Durchleitung von bei Auslösung in dem Kanal (15, 24) beschleunigten und in Eingriff mit der Außenverzahnung (13) des Antriebsrades (11) gelangenden, in den Kanal (15, 24) lose angeordneten Massekörpern (18) besteht, **dadurch gekennzeichnet, daß** zur synchronen, formkongruenten Einsteuerung der Massekörper (18) in die Außenverzahnung (13) des Antriebsrades (11) ein aus einem Massekörper (18) und einem voreilenden Sucher (28) bestehendes Formelement (16) vorgesehen ist, wobei der Sucher des Formelementes (16) als flaches, zwischen dem äußeren Rand des Antriebsrades (11) und der Innenwandung des Kanals (24) durchführbares Bauteil (28) ausgebildet ist und das Antriebsrad (11) eine an seinem äußeren Rand ausgebildete zweite Verzahnung als Steuerverzahnung (25) aufweist, und wobei die Außenverzahnung (13) der Aufnahme der Massekörper (17, 18) und die Steuerverzahnung (25) zum Zusammenwirken mit dem Sucherbauteil (28) des Formelementes (16) derart zueinander angeordnet sind, daß das Sucherbauteil (28) bei einer passenden Zuordnung des an ihn angeschlossenen ersten Massekörpers (18) zu einer Ausnehmung der Außenverzahnung (13) auf die Außenkontur eines zwischen den Zahnlücken (26) der Steuerverzahnung (25) liegenden Zahnsteges (27) trifft und bei einer kritischen Zuordnung von Massekörper (18) zur Außenverzahnung (13) in eine Zahnlücke (26) der Steuerverzahnung (25) greift und durch Schub gegen die Zahnflanke das Antriebsrad (11) in die passende Stellung verdreht.

6. Rotationsstraffer nach Anspruch 5, **dadurch gekennzeichnet, daß** das Sucherbauteil als T-förmiges Bauteil (28) mit einem mit der Steuerverzahnung (25) zusammenwirkenden T-Balken (32) ausgebildet und mit dem als Kugel ausgebildeten ersten Massekörper (18) verbunden ist.

7. Rotationsstraffer nach Anspruch 6, **dadurch gekennzeichnet, daß** das Sucherbauteil (28) und erster Massekörper (18) einstückig miteinander ausgebildet sind.

8. Rotationsstraffer nach Anspruch 6, **dadurch gekennzeichnet, daß** das Sucherbauteil an seinem dem T-Balken (32) gegenüberliegenden freien Ende gespreizt ist und damit die Kugel (18) in einer zugeordneten Nut (33) formschlüssig umgreift.

9. Rotationsstraffer nach einem der Ansprüche 5 bis 8, **dadurch gekennzeichnet, daß** das T-förmige Sucherbauteil (28) als massives Metallteil ausgebildet ist.

10. Rotationsstraffer nach einem der Ansprüche 1 bis 9, **dadurch gekennzeichnet, daß** das Formelement (16) in seiner Ausgangsstellung von einem in der Wandung des den Kanal (24) ausbildenden Rohrgehäuses (15) festgelegten Clip (20) fixiert ist.

11. Rotationsstraffer nach Anspruch 10, **dadurch gekennzeichnet, daß** der Clip (20) in der Wandung des Rohrgehäuses (15) mittels eines Scherstiftes (21) fixiert ist.

12. Rotationsstraffer nach Anspruch 10 oder 11, **dadurch gekennzeichnet, daß** der Clip (20) einen zwischen zwei Massekörper eingreifenden und die Reihe von aufeinanderfolgenden Massekörpern aneinanderdrückenden Federarm aufweist.

## Claims

1. Rotary tensioner for a safety belt, in particular in motor vehicles, with a belt retractor, the belt retraction spool of which is rotated in the belt retracting direction by an associated drive (10) when the rotary tensioner coupled thereto is actuated, whereby the drive (10) comprises a drive wheel (11) that has exterior teeth (13) for the spool, and a channel (15,24) that extends about at least a portion of the periphery of the drive wheel (11) for conducting therethrough inertia elements (18) that are loosely disposed in the channel (15,24), that are accelerated in the channel (15,24) when the system is triggered and that engage the exterior teeth (13) of the drive wheel (11), **characterized in that** for the synchronous, shape-congruent introduction of the inertia elements (18) into the exterior teeth (13) of the drive wheel (11) there is provided a shaped element (16) that comprises as finder element a first inertia element (13) having only a partial contour of a complete inertia element adapted to the external teeth (13) of the drive wheel (11), and also comprises a complete second inertia element (18) integrally joined thereto via a connecting rib (19).

2. Rotary tensioner according to claim 1, wherein said inertia elements are embodied as spheres, **characterized in that** the partial contour of the first inertia element(17) comprises a hemisphere oriented in the drive direction, the terminating plane (23) of which, which faces the second inertia element (18), is disposed at an angle to the radius line of the drive wheel (11).

3. Rotary tensioner according to claim 1 or 2, **characterized in that** the connecting rib (19) at least partially continues the missing contour of the first inertia element (17) to the second inertia element (18).

4. Rotary tensioner according to one of the claims 1 to 3. whereby the drive wheel is separated into two symmetrical halves, **characterized in that** the connecting rib (19) engages between the halves of the drive wheel (11), and the shaped element (16) is guided thereby.

5. Rotary tensioner for a safety belt, in particular in motor vehicles, with a belt retractor, the belt retraction spool of which is rotated in the belt retracting direction by an associated drive (10) when the rotary tensioner coupled thereto is actuated, whereby the drive (10) comprises a drive wheel (11) that has exterior teeth (13) for the spool, and a channel (15,24) that extends about at least a portion of the periphery of the drive wheel (11) for conducting therethrough inertia elements (18) that are loosely disposed in the channel (15,24), that are accelerated in the channel (15,24) when the system is triggered and that engage the exterior teeth (13) of the drive wheel (11), **characterized in that** for the synchronous, shape-congruent introduction of the inertia elements (18) into the exterior teeth (13) of the drive wheel (11) there is provided a shaped element (16) that comprises an inertia element (18) and a leading finder element (17,28), whereby the finder element of the shaped element (16) is embodied as a flat component (28) that can be guided between the exterior edge of the drive wheel (11) and the interior wall of the channel (24), and the drive wheel (11) has formed on its exterior rim as control teeth (25) a second set of teeth, and whereby the exterior teeth (13), for receiving the inertia elements (18), and the control teeth (25), for cooperating with the finder component (28) of the shaped element (16), are arranged relative to one another in such a way that the finder component (28), when there is a fitting association of the first inertia element (18) that is attached to it to a recess of the exterior teeth (13), encounters the exterior contour of a tooth ridge (27) located between the gaps (26) of the control teeth (25) and, during a critical association of inertia elements (18) relative to the exterior teeth (13), engages a gap (26) of the control teeth (25) and rotates the drive wheel (11) into the fitting position by pushing against the tooth flank.

6. Rotary tensioner according to claim 5, **characterized in that** the finder component is embodied as a T-shaped component (28) with a T-piece (32) that cooperates with the control teeth (25) and is connected to the first inertia element (18), which is embodied as a sphere.

7. Rotary tensioner according to claim 6, **characterized in that** the finder component (28) and the first inertia element (18) are embodied integrally with one another.

8. Rotary tensioner according to claim 6, **characterized in that** the finder component is spread apart at its free end opposite the T-piece (32) and thus engages the sphere (18) in a form-fit in an associated groove (33).

9. Rotary tensioner according to one of the claims 5 to 8, **characterized in that** the T-shaped finder component (28) is embodied as a solid metal part.

10. Rotary tensioner according to one of the claims 1 to 9, **characterized in that** the shaped element (16) is fixed in its starting position by a clip (20) that is fixed in the wall of the tubular housing (15) that forms the channel (24).

11. Rotary tensioner according to claim 10, **characterized in that** the clip (20) is fixed in the wall of the tubular housing (15) by means of a shear pin (21).

12. Rotary tensioner according to claim 10 or 11, **characterized in that** the clip (20) has a spring arm that engages between two inertia elements and presses the series of successive inertia elements together.

## Revendications

1. Prétendeur de rotation pour une ceinture de sécurité, en particulier dans des véhicules, comprenant un rétracteur dont l'axe enrouleur de ceinture se met en rotation, dans la direction d'enroulement de la ceinture de sécurité en cas de déclenchement, par un dispositif (10) qui y est associé, du prétendeur de rotation accouplé à celui-ci, le système d'entraînement (10) se composant d'une roue motrice (11) disposant d'une denture extérieure (13), destinée à l'axe enrouleur de ceinture, et d'un canal (15, 24) enveloppant la roue motrice (11) au moins sur une partie de la périphérie, afin d'assurer le transit de corps formant masse (18), accélérés dans le canal (15, 24) lors du déclenchement, venant engrener avec la denture extérieure (13) de la roue motrice (11) et librement mobiles dans le canal (15, 24), **caractérisé en ce qu'**afin de guider de façon synchrone et par coïncidence de forme les corps formant masse (18) dans la denture extérieure (13) de la roue motrice (11), il est prévu un élément structuré (16) composé d'un premier corps formant masse (13) ne présentant qu'un contour partiel d'un corps formant masse entier, contour qui est adapté à la denture extérieure (13) de la roue motrice (11), premier corps qui sert d'élément de positionnement, et composé d'un deuxième corps formant masse (18), dont la forme est complète, qui ne forme qu'une seule pièce avec le premier corps formant moyen, par l'intermédiaire d'une nervure de liaison (19).

2. Prétendeur de rotation selon la revendication 1, dans lequel les corps formant masse ont la forme de billes, **caractérisé en ce que** le contour partiel du premier corps formant masse (17) se compose d'une demi-bille disposée dans la direction d'entraînement, dont une surface de limitation (23) est adapté au deuxième corps formant masse (18) en formant un angle par rapport au rayon de la roue motrice (11).

3. Prétendeur de rotation selon la revendication 1 ou 2, **caractérisé en ce que** la rainure de liaison (19) forme au moins en partie la continuation du contour manquant du premier corps formant masse (17) par rapport au deuxième corps formant masse (18).

4. Prétendeur de rotation selon l'une des revendications 1 à 3, dans lequel la roue motrice est formée séparément avec deux moitiés symétriques, **caractérisé en ce que** la rainure de liaison (19) est en prise entre les moitiés de la roue motrice (11), et **en ce que** l'élément structuré (16) est de ce fait guidé.

5. Prétendeur de rotation pour une ceinture de sécurité, en particulier dans des véhicules, comprenant un rétracteur dont l'axe enrouleur de ceinture se met en rotation, dans la direction d'enroulement de la ceinture de sécurité en cas de déclenchement, par un dispositif (10) qui y est associé, du prétendeur de rotation accouplé à celui-ci, le système d'entraînement (10) se composant d'une roue motrice (11) disposant d'une denture extérieure (13), destinée à l'axe enrouleur de ceinture, et d'un canal (15, 24) enveloppant la roue motrice (11) au moins sur une partie de la périphérie, afin d'assurer le transit de corps formant masses (18), accélérés dans le canal (15, 24) lors du déclenchement, venant engrener avec la denture extérieure (13) de la roue motrice (11) et librement mobiles dans le canal (15, 24), **caractérisé en ce qu'**afin de guider de façon synchrone et par coïncidence de forme les corps formant masse (18) dans la denture extérieure (13) de la roue motrice (11), il est prévu un élément structuré (16) composé d'un corps formant masse (18) et d'un élément de positionnement (28) le précédant, l'élément de positionnement de l'élément structuré (16) étant conformé en composant (28) plat, susceptible d'être introduit entre le bord externe de la roue motrice (11) et la paroi interne du canal (24), et la roue motrice (11) présentant une deuxième denture, formée sur son bord externe, qui sert de denture de commande (25), et la denture extérieure (13), qui sert à recevoir les corps formant masses (17, 18), et la denture de commande (25), qui est destinée à coopérer avec le composant de positionnement (28) de l'élément structuré (16) étant adaptées l'une à l'autre de telle sorte que le composant de positionnement (28), lorsqu'un premier corps formant masse (18), relié à lui, est correctement associé à un logement de la denture extérieure (13), heurte le contour externe d'un méplat formant dent (27), situé entre les creux de dents (26) de la denture de commande (25), *et,* lorsque le corps formant masse (18) est associé critiquement à la denture extérieure (13), pénètre dans un creux de dent (26) de la denture de commande (25) et, grâce à une poussée exercée contre le flanc de la dent, fait passer la roue motrice (11) dans la position adaptée.

6. Prétendeur de rotation selon la revendication 5, **caractérisé en ce que** le composant de positionnement est formé d'un composant (28) en forme de T avec une poutre (32) agissant conjointement avec la denture de commande (25) et avec le premier corps formant masse (18) ayant la forme d'une bille.

7. Prétendeur de rotation selon la revendication 6, **caractérisé en ce que** le composant de positionnement (28) et le premier corps formant masse (18) forment un élément unique.

8. Prétendeur de rotation selon la revendication 6, **caractérisé en ce que** le composant de positionnement s'étend le long de son extrémité libre vis-à-vis de la poutre (32) et enveloppe ainsi la bille (18) dans une ramure adaptée (33) crabotée.

9. Prétendeur de rotation selon l'une des revendications 5 à 8, **caractérisé en ce que** le composant de positionnement (28) en forme de T est formé d'une pièce métallique massive.

10. Prétendeur de rotation selon l'une des revendications 1 à 9, **caractérisé en ce que** l'élément structuré (16) est fixé dans sa position de sortie par un clip (20) solidement attaché à la paroi du boîtier tubulaire (15) formant le canal (24).

11. Prétendeur de rotation selon la revendication 10, **caractérisé en ce que** le clip (20) est fixé sur la paroi du boîtier tubulaire (15) au moyen d'une goupille de sécurité (21).

12. Prétendeur de rotation selon l'une des revendications 10 ou 11, **caractérisé en ce que** le clip (20) comporte un bras à ressort placé entre deux corps formant masse et prenant appui sur la série des corps formant masse qui se suivent les uns derrière les autres.
